Europäisches Patentamt

European Patent Office

Office européen des brevets

(19)

(11) Veröffentlichungsnummer: **0 019 203**
**B1**

(12) **EUROPÄISCHE PATENTSCHRIFT**

(45) Veröffentlichungstag der Patentschrift:
27.10.82

(51) Int. Cl.³: **C 02 F 3/30**

(21) Anmeldenummer: 80102493.6

(22) Anmeldetag: 07.05.80

(54) Verfahren und Vorrichtung zur Nitrifikation und Denitrifikation von Abwässern.

(30) Priorität: 10.05.79 DE 2918950

(43) Veröffentlichungstag der Anmeldung:
26.11.80 Patentblatt 80/24

(45) Bekanntmachung des Hinweises auf die Patenterteilung:
27.10.82 Patentblatt 82/43

(84) Benannte Vertragsstaaten:
BE DE GB NL

(56) Entgegenhaltungen:
DE-A-2 233 801
DE-A-2 354 383
DE-A-2 454 426
DE-A-2 616 212
DE-A-2 809 094

(73) Patentinhaber: **Linde Aktiengesellschaft,
Abraham-Lincoln-Strasse 21, D-6200 Wiesbaden (DE)**

(72) Erfinder: **Gregor, Carl-Heinz, Dr., Kreuzeckstrasse 12,
D-8022 Grünwald (DE)**
Erfinder: **Reimann, Hans, Dr,, Rudolf-Wilke-Weg 21,
D-8000 München 71 (DE)**

(74) Vertreter: **Schaefer, Gerhard, Dr., Linde
Aktiengesellschaft Zentrale Patentabteilung,
D-8023 Höllriegelskreuth (DE)**

## Verfahren und Vorrichtung zur Nitrifikation und Denitrifikation von Abwässern

Die Erfindung betrifft ein Verfahren zur Nitrifikation und Denitrifikation von insbesondere hochbelasteten, organische und stickstoffreiche Verbindungen enthaltenden Abwässern in einer biologischen Abwasserreinigungsanlage mit zwei Stufen, bei dem in der ersten Stufe eine Oxidation der organischen Kohlenstoffverbindungen und eine Nitrifikation der stickstoffreichen Verbindungen und in der zweiten Stufe eine Denitrifikation durchgeführt wird und bei dem das zufließende Abwasser auf beide Stufen verteilt, der Ablauf der ersten Stufe zur zweiten Stufe geleitet und vom Ablauf jeder Stufe belebter Schlamm abgetrennt und mindestens teilweise zur jeweiligen Stufe zurückgeleitet wird, sowie eine Vorrichtung zur Durchführung des Verfahrens.

Bei einem solchen bekannten Verfahren wird in der ersten Stufe unter aeroben Bedingungen die Nitrifikation und in der zweiten Stufe unter anoxischen Bedingungen die Denitrifikation durchgeführt. Dabei können neben stickstoffhaltige Verbindungen in gelöster und/oder suspendierter Form enthaltenden organischen Abwässern auch solche organische Abwässer behandelt werden, die zusätzlich zu den stickstoffhaltigen Verbindungen Phosphate enthalten.

Ein wesentlicher Nachteil dieses bekannten Verfahrens besteht darin, daß der Abwasseranteil des zulaufenden Abwassers, der direkt in die zweite Stufe geleitet wird, nicht mehr nitrifiziert werden kann, wodurch mit diesem Verfahren eine Stickstoffelimination aus dem Abwasser von höchstens 75% möglich ist. Darüber hinaus ist bei diesem Verfahren nicht zu vermeiden, daß sich die Denitrifikation im Nachklärbecken der zweiten Stufe fortsetzt und damit das gereinigte Abwasser unter anaeroben Bedingungen sowie unter Mitführung des bei der Denitrifikation im Nachklärbecken entstehenden Schwimmschlamms in den Vorfluter eingeleitet wird.

In der DE-A-2 809 094 ist ein zweistufiges Verfahren zur Entfernung von organischen Stoffen und Stickstoffverbindungen aus Abwasser beschrieben, bei dem das Abwasser in der ersten Stufe nacheinander durch eine Denitrifikationszone, eine Nitrifikationszone und ein Zwischenklärbecken und in der zweiten Stufe nacheinander durch eine alternierend belüftete Zone, eine kontinuierlich belüftete Zone und ein Nachklärbecken geleitet wird. Bei diesem Verfahren wird ein Wirkungsgrad von 95% hinsichtlich der Stickstoffentfernung zwar erreicht, jedoch nur unter Verwendung je eines Denitrifikationsreaktors in beiden Stufen, wobei außerdem die Hauptdenitrifikationsvorgänge in der ersten Stufe ablaufen. Das erfindungsgemäße Verfahren hat demgegenüber den Vorteil, daß ein Denitrifikationsreaktor eingespart und gleichzeitig der Wirkungsgrad erhöht wird, wobei die Denitrifikationsvorgänge auf die zweite Stufe verschoben werden.

Der Erfindung liegt die Aufgabe zugrunde, ein Verfahren der eingangs genannten Art zur Nitrifikation und Denitrifikation von insbesondere hochbelasteten, organische und stickstoffreiche Verbindungen enthaltenden Abwässern sowie eine Vorrichtung zur Durchführung des Verfahrens so auszugestalten, daß ohne besonderen Aufwand und unter Erreichung einer Güteverbesserung des Ablaufs in den Vorfluter eine hohe Stickstoffelimination von über 90% aus dem Abwasser möglich ist.

Diese Aufgabe wird erfindungsgemäß dadurch gelöst, daß in der zweiten Stufe nach einer Zone mit anoxischen Bedingungen eine Zone mit sauerstoffreichen Bedingungen aufrechterhalten wird, daß in der zweiten Stufe zwischen der Zone mit sauerstoffreichen Bedingungen und der Zone mit anoxischen Bedingungen ein interner Rücklauf betrieben wird und daß der unter anoxischen Bedingungen betriebenen Zone der zweiten Stufe sowohl der bei der Abtrennung von belebtem Schlamm aus dem Ablauf der ersten Stufe anfallende Schwimmschlamm als auch 25 bis 50% der der Abwasserreinigungsanlage zulaufenden Abwassermenge zugeführt wird.

Das Verfahren gemäß der Erfindung bringt insbesondere den Vorteil mit sich, daß auch der der zweiten Stufe zugeführte und das für die Durchführung der Denitrifikation erforderliche Substrat zur Verfügung stellende Abwasserteilstrom in der unter sauerstoffreichen Bedingungen betriebenen Zone der zweiten Stufe nitrifiziert und anschließend über den zwischen der Zone mit sauerstoffreichen Bedingungen und der Zone mit anoxischen Bedingungen betriebenen internen Rücklauf erneut der Denitrifikation zugeführt werde kann. Dazu kommt, daß bei der Denitrifikation in der zweiten Stufe durch Einleiten des bei der Abtrennung von belebtem Schlamm aus dem Ablauf der ersten Stufe anfallenden Schwimmschlamms, der in der Zwischenklärung infolge einer dort ablaufenden Denitrifikation auftritt, in die unter anoxischen Bedingungen betriebene Zone der zweiten Stufe ein Verarmen an fakultativen, heterotrophen Bakterien (Denitrifikanten) im Belebtschlamm der zweiten Stufe vermieden wird und daß durch Einleiten von 25 bis 50% der der Abwasserreinigungsanlage zulaufenden Abwassermenge in die anaerobe Zone der zweiten Stufe genügend organisches Substrat, das als Elektronendonator für die Nitrat- und Nitritreduktion zu Stickstoff, Distickstoffoxid und anderen Stickstoffgasen notwendig ist, vorhanden ist. Auf diese Weise wird ein hoher Wirkungsgrad der Stickstoffentfernung von über 90% erzielt. Zusätzlich wird durch die Nachschaltung der unter sauerstoffreichen Bedingungen betriebenen Zone an die unter anoxischen Bedingungen betriebenen Zone erreicht, daß in der Nachklärung aerobe Verhältnisse aufrechterhalten werden können, wodurch die Güte des Ablaufes in den Vorfluter verbessert wird.

Um für die Nitrat- und Nitritreduktion unabhängig vom Abwasserzulauf immer genügend Elektronendonatoren zur Verfügung zu haben, ist es dabei zweckmäßig, der Zone mit sauerstoffarmen

2

Bedingungen der zweiten Stufe zusätzlich zu dem Abwasserteilstrom organische Kohlenstoffverbindungen, wie insbesondere Methanol und Methan, zuzuführen.

Zweckmäßigerweise werden beide Verfahrensführungen so betrieben, daß bei einer Temperatur von 20 bis 40° C und einem pH-Wert von 6,0 bis 8,5 in der ersten Stufe eine Raumbelastung von 1,5 bis 6 kg $BSB_5/m^3$ Tag und eine Belebtschlammkonzentration von 3 bis 12 kg $TS/m^3$ sowie in der zweiten Stufe eine Raumbelastung von 0,5 bis 3 kg $BSB_5/m^3$ Tag und eine Belebtschlammkonzentration von 3 bis 8 kg $TS/m^3$ aufrechterhalten wird.

Dabei ist unter $BSB_5$ der biochemische Sauerstoffbedarf (Menge an gelöstem Sauerstoff, der zum völligen oxidativen biologischen Abbau organischer Stoffe im gelösten Wasser benötigt wird) in 5 Tagen und unter kg $TS/m^3$ das Gewicht der Trockensubstanz des belebten Schlammes je $m^3$ zu verstehen.

Besonders gute Ergebnisse werden erzielt, wenn die Temperatur zwischen 25 und 35°C und der pH-Wert zwischen 6,5 und 7,5 gehalten werden, und wenn in der ersten Stufe eine Belebtschlammkonzentration von 4 bis 8 kg $TS/m^3$ und in der zweiten Stufe eine Belebtschlammkonzentration von 4 bis 6 kg $TS/m^3$ aufrechterhalten wird.

Zur Sauerstoffversorgung der Mikroorganismen ist es vorteilhaft, dem Belüftungsbecken der ersten Stufe sowie der Zone mit sauerstoffreichen Bedingungen der zweiten Stufe angereicherte Luft oder technischen Sauerstoff zuzuführen und aus dem Belüftungsbecken und aus dieser Zone eine entsprechende Abgasmenge abzuführen. Dabei können beispielsweise Oberflächenbelüftungsmittel oder Unterwasserbelüftungsmittel vorgesehen sein. Eine Oberflächenbelüftung in offenen Becken hat dabei den Nachteil, daß sie bei einer niedrigen Außentemperatur zu einer Abkühlung führen kann und außerdem in ihrer Anwendung durch die Tiefe der belüfteten Flüssigkeit begrenzt ist.

Die Konzentration des gelösten Sauerstoffs in den aeroben Zonen sollte insbesondere bei Vorhandensein eines internen Rücklaufs zwischen der Zone mit sauerstoffreichen Bedingungen und der Zone mit anoxischen Bedingungen so gewählt werden, daß bei der Rückführung des Mischwassers aus der Zone mit sauerstoffreichen Bedingungen in die Zone mit anoxischen Bedingungen nicht zu viel Sauerstoff mitgeführt wird, um eine ungünstige Auswirkung auf die Denitrifikation in der Zone mit anoxischen Bedingungen zu vermeiden.

Um eine vollständige Ausnutzung des zugeführten Sauerstoffs zu erreichen, ist es zweckmäßig, das Abgas des Belüftungsbeckens der ersten Stufe der unter sauerstoffreichen Bedingungen betriebenen Zone der zweiten Stufe zuzuführen.

Die Erfindung betrifft ferner eine Vorrichtung zur Durchführung des Verfahrens mit einer Abwasserreinigungsanlage mit zwei Stufen, bei der die erste Stufe ein Belüftungsbecken und ein Klärbecken mit Schlammrückleitung in das Belüftungsbecken und die zweite Stufe ein Belebungsbecken und ein Klärbecken mit Schlammrückleitung in das Belebungsbecken aufweisen. Die Vorrichtung ist dadurch gekennzeichnet, daß dem Belebungsbecken der zweiten Stufe ein Behandlungsbecken mit anoxischen Bedingungen vorgeschaltet ist, daß zwischen dem Belebungsbecken und dem Behandlungsbecken der zweiten Stufe eine Leitung zur Rückführung von Mischwasser aus dem Belebungsbecken in das Behandlungsbecken vorhanden ist und daß an das Behandlungsbecken der zweiten Stufe sowohl eine Verbindungsleitung zu dem Zwischenklärbecken der ersten Stufe zur Überleitung von Schwimmschlamm als auch eine Zuleitung für einen Teil der der Abwasserreinigungsanlage zulaufenden Abwassermenge angeschlossen ist.

Die einzelnen Stufen können dabei sowohl als volldurchmischte Reaktoren als auch als mehrstufige Kaskaden ausgebildet sein, um so eine optimale Verfahrensführung je nach Beschaffenheit des Abwassers zu gewährleisten.

Weitere Einzelheiten der Erfindung werden anhand eines in der Figur schematisch dargestellten Ausführungsbeispiels einer zur Durchführung des erfindungsgemäßen Verfahrens geeigneten Abwasserreinigungsanlage erläutert. Es zeigt

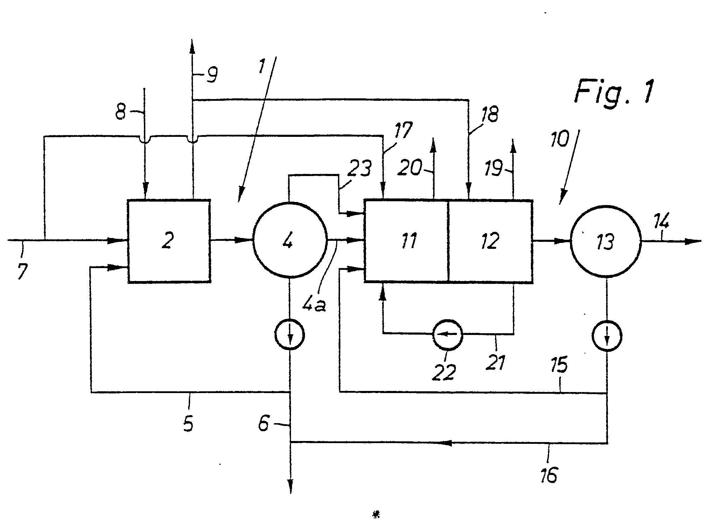

Fig. 1 ein schematisches Flußdiagramm einer zweistufigen Abwasserreinigungsanlage mit einer unter anoxischen und einer unter sauerstoffreichen Bedingungen betriebenen Zone in der zweiten Stufe.

In der Figur ist mit 1 die erste Stufe und mit 10 die zweite Stufe einer zweistufigen Abwasserreinigungsanlage zur Nitrifikation und Denitrifikation von insbesondere hochbelasteten, organische und stickstoffreiche Verbindungen enthaltenden Abwässern bezeichnet.

Gemäß Fig. 1 umfaßt die erste Stufe ein Belüftungsbecken 2 mit einer Zuleitung 7 für zu behandelndes Abwasser und ein dem Belüftungsbecken 2 nachgeschaltetes Zwischenklärbecken 4 mit einem Ablauf 4a, einer Schlammrückführung 5 vom Zwischenklärbecken 4 zum Belüftungsbecken 2 und einer Schlammableitung 6 zum Abzug von Überschußschlamm aus der ersten Stufe 1. Zur Sauerstoffversorgung der in der Flüssigkeit vorhandenen Mikroorganismen ist an das in diesem Fall gegen die Atmosphäre geschlossen ausgebildete Belüftungsbecken 2 eine Gaszuleitung 8 für die Zufuhr eines sauerstoffreichen Gases sowie eine Gasableitung 9 für verbrauchtes Abgas angebracht.

Die zweite Stufe 10 ist an den Ablauf 4a des Zwischenklärbeckens 4 der ersten Stufe 1 angeschlossen und weist ein unter anoxischen Bedingungen betriebenes Behandlungsbecken 11, ein mit diesem in Verbindung stehendes, unter sauerstoffreichen Bedingungen betriebenen Belebungsbecken 12 sowie ein dem Belebungsbecken 12 nachgeschaltetes Nachklärbecken 13 mit einem Ablauf 14 für Klarwasser zum Vorfluter und einer Schlammrückleitung 15 vom Nachklärbecken 13 zum Behandlungsbecken 11 auf. Zur Ableitung von Überschußschlamm aus der zweiten Stufe 10 ist an dem Nachklärbecken 13 zusätzlich eine Schlammableitung 16 angeordnet, die mit einer Schlammableitung 6 der ersten Stufe 1 in Verbindung stehen kann. Außer der Schlammrückleitung 15 und dem Ablauf 4a des Zwischenklärbeckens 4 der ersten Stufe 1 ist an das Behandlungsbecken 11 der zweiten Stufe 10 eine Zuleitung 17 für die Einleitung eines Teils der der Abwasserreinigungsanlage zulaufenden Abwassermenge, eine Verbindungsleitung 23 vom Zwischenklärbecken 4 der ersten Stufe zur Überleitung von Schwimmschlamm sowie eine Leitung 21 mit zwischengeschalteter Pumpe 22 zur Rückführung von Mischwasser aus dem Belebungsbecken 12 angeschlossen. Zur Ableitung von gasförmigem Stickstoff dient eine Abzugsleitung 20. Das Belebungsbecken 12 weist dagegen wie das Belüftungsbecken 2 der ersten Stufe 1 eine Gaszuleitung 18 für die Zufuhr eines sauerstoffreichen Gases sowie eine Gasableitung 19 für verbrauchtes Abgas auf. Die Gaszuleitung 18 kann dabei zur Ausnutzung des dem Belüftungsbecken 2 der 1. Stufe zugeführten Sauerstoffs mit der Abgasleitung 9 des Belüftungsbeckens 2 in Verbindung stehen.

Regeleinrichtungen zur Regelung der Gaszu- und -ableitung entsprechend dem Sauerstoffverbrauch der Mikroorganismen sowie Gaseintragungssysteme sind bei den Belüftungs- und Belebungsbecken beider Stufen 1 und 10 der Übersichtlichkeit wegen und, da diese in ihren unterschiedlichen Ausführungsformen hinlänglich bekannt sind und die Erfindung sich nicht auf sie bezieht, nicht dargestellt.

Als sauerstoffreiches Gas wird den Belüftungs- bzw. Belebungsbecken der beiden Stufen 1, 10 vorzugsweise ein mindestens 50 Vol.-% Sauerstoff enthaltendes Gas zugeführt. Dabei kann das Abgas des Belüftungsbeckens 2 der ersten Stufe 1 mindestens einen Teil des Sauerstoffbedarfs des Belebungsbeckens 12 der zweiten Stufe 10 decken.

Anstelle der Verwendung von geschlossenen Belüftungs- und Belebungsbecken mit der Zuleitung eines sauerstoffreichen Gases besteht darüber hinaus auch die Möglichkeit, diese Becken offen auszuführen.

Eine Abwasserreinigungsanlage gemäß Fig. 1 arbeitet dabei so, daß in der ersten Stufe 1 der biologische Abbau der Kohlenstoffverbindungen und zumindest eine Teilnitrifikation eines ersten Abwasserteilstromes durchgeführt wird. Durch die Aufgliederung der zweiten Stufe 10 in einen anoxischen und einen aeroben Teil 11, 12 werden dann im anoxischen Teil 11 die oxidierten Stickstoffverbindungen zu elementaren Stickstoff, der gasförmig entweicht, reduziert. Dabei wird ein zweiter, über Leitung 17 zugeführter Teilstrom des Rohabwassers oder auch ein Elektronendonator, wie Methanol oder Methan, ohne Zufuhr von Sauerstoff abgebaut. Die in die zweite Stufe 10 über das Rohabwasser eingetragenen Stickstoffverbindungen, die sich aus Ammoniumverbindungen und organischen Stickstoffverbindungen zusammensetzen, werden im zweiten, aeroben Teil 12 der zweiten Stufe 10 neben dem Restabbau der Kohlenstoffverbindungen oxidiert und die durch Nitrifikation im aeroben Teil 12 entstandenen Stickstoffverbindungen der oxidierten Form dem ersten anoxischen Teil 11 der zweiten Stufe 10 erneut zur Stickstoffreduzierung über einen internen Rücklauf 21, 22 zugeführt. Dadurch ist eine weitgehende Stickstoffelimination bis über 95% vor allem bei hochbelasteten, stark stickstoffhaltigen Abwässern, insbesondere industrieller Herkunft, zu erreichen.

Bei Verwendung von Methan oder Methanol als Substrat für die zweite Stufe 10 besteht gegebenenfalls die Möglichkeit, den internen Rücklauf 21, 22 zwischen dem unter sauerstoffreichen Bedingungen betriebenen Belebungsbecken 12 und dem unter anoxischen Bedingungen betriebenen Behandlungsbecken 11 der zweiten Stufe 10 wegfallen zu lassen. Darüber hinaus können die Belüftungs- bzw. Belebungsbecken 2, 12 beider Stufen 1, 10 als voll durchmischte Becken oder auch als mehrstufige Kaskaden ausgebildet sein.

In der nachstehenden Aufstellung sollen Ergebnisse aufgezeigt werden, die bei der Behandlung eines stark belasteten Abwassers aus einer Knochenentfettung in einer Vorrichtung entsprechend der Fig. 1 gewonnen wurden. Die Verfahrensparameter von zwei verschiedenen Versuchsphasen A und B sind in der Tabelle 1 angegeben und die erzielten Ergebnisse in Tabelle 2. Dabei ist unter CSB der chemische Sauerstoffbedarf (Menge an gelöstem Sauerstoff, die zur völligen chemischen Oxidation organischer Stoffe im Wasser benötigt wird) zu verstehen.

Tabelle 1

Verfahrensparameter

| Stufe 1 | A | B | |
|---|---|---|---|
| Raumbelastung $B_R$ | 3,3 | 4,6 | kg $BSB_5$/m³ Tag |
| Belebtschlammkonzentration | 11,5 | 11,4 | kg TS/m³ |
| Schlammbelastung $B_{TS}$ | 0,29 | 0,40 | kg $BSB_5$/kg TS Tag |
| pH im Zulauf | 7,5—8,5 | 7,5—8,5 | — |
| Temperatur | 20—30 | 20—30 | °C |
| Sauerstoffgehalt | 12 | 12 | mg/l |

| Stufe 2 | A | B | |
|---|---|---|---|
| Raumbelastung $B_R$ | 0,75 | 1,05 | kg $BSB_5$/m³ Tag |
| Belebtschlammkonzentration | 7,2 | 7,9 | kg TS/m³ |
| Schlammbelastung $B_{TS}$ | 0,10 | 0,13 | kg $BSB_5$/kg TS Tag |
| pH im Belebungsbecken | 6,7 | 6,7 | — |
| Temperatur | 20—30 | 20—30 | °C |
| Sauerstoffgehalt aerobe Zone | 10—15 | 10—15 | mg/l |
| Zulaufverhältnis 1. Stufe/ 2. Stufe | 3 : 1 | 3 : 1 | — |

Tabelle 2

Ergebnisse

| | | 1. Stufe | | 2. Stufe | |
|---|---|---|---|---|---|
| | | A | B | A | B |
| $BSB_5$ | | | | | |
| Zulauf | mg/l | 5290 | 7330 | 1775 | 2480 |
| Ablauf | mg/l | 28 | 70 | 13 | 19 |
| CSB | | | | | |
| Zulauf | mg/l | 7280 | 10 440 | 2620 | 3680 |
| Ablauf | mg/l | 300 | 320 | 172 | 165 |
| Stickstoffverbind. | | | | | |
| Zulauf Rohabw. | mg N/l | 920 | 1150 | 920 | 1150 |
| Ablauf | mg N/l | 300 | 185 | 10 | 10 |
| Stickstoffelimination | % | 67 | 83 | 98,9 | 99,1 |

**Patentansprüche**

1. Verfahren zur Nitrifikation und Denitrifikation von insbesondere hochbelasteten, organische und stickstoffreiche Verbindungen enthaltenden Abwässern in einer biologischen Abwasserreinigungsanlage mit zwei Stufen, bei dem in der ersten Stufe eine Oxidation der organischen Kohlenstoffverbindungen und eine Nitrifikation der stickstoffreichen Verbindungen und in der zweiten Stufe eine Denitrifikation durchgeführt wird und bei dem das zufließende Abwasser auf beide Stufen verteilt, der Ablauf der ersten Stufe zur zweiten Stufe geleitet und vom Ablauf jeder Stufe belebter Schlamm abgetrennt und mindestens teilweise zur jeweiligen Stufe zurückgeleitet wird, dadurch gekennzeichnet, daß in der zweiten Stufe nach einer Zone mit anoxischen Bedingungen eine Zone mit sauerstoffreichen Bedingungen aufrechterhalten wird, daß in der zweiten Stufe zwischen der Zone mit sauerstoffreichen Bedingungen und der Zone mit anoxischen Bedingungen ein interner Rücklauf betrieben wird und daß der unter anoxischen Bedingungen betriebenen Zone der zweiten Stufe sowohl der bei der Abtrennung von belebtem Schlamm aus dem Ablauf der ersten Stufe anfallende Schwimmschlamm als auch 25 bis 50% der der Abwasserreinigungsanlage zulaufenden Abwassermenge zugeführt wird.

2. Verfahren nach Anspruch 1, dadurch gekennzeichnet, daß der Zone mit anoxischen Bedingungen der zweiten Stufe zusätzlich zu dem Abwasserteilstrom organische Kohlenstoffverbindungen als Elektronendonatoren, wie insbesondere Methanol oder Methan, zugeführt werden.

3. Verfahren nach Anspruch 1 oder 2, dadurch gekennzeichnet, daß bei einer Temperatur von 20 bis 40°C und einem pH-Wert von 6,0 bis 8,5 in der ersten Stufe eine Raumbelastung von 1,5 bis 6 kg $BSB_5/m^3$ Tag und eine Belebtschlammkonzentration von 3 bis 12 kg TS/m³ sowie in der zweiten Stufe eine Raumbelastung von 0,5 bis 3 kg $BSB_5/m^3$ Tag und eine Belebtschlammkonzentration von 3 bis 8 kg TS/m³ aufrechterhalten wird.

4. Verfahren nach Anspruch 2, dadurch gekennzeichnet, daß die Temperatur zwischen 25 und 35°C und der pH-Wert zwischen 6,5 und 7,5 gehalten werden.

5. Verfahren nach Anspruch 3 oder 4, dadurch gekennzeichnet, daß in der ersten Stufe eine Belebtschlammkonzentration von 4 bis 8 kg TS/m³ und in der zweiten Stufe eine Belebtschlammkonzentration von 4 bis 6 kg TS/m³ aufrechterhalten wird.

6. Verfahren nach einem der Ansprüche 1 bis 5, dadurch gekennzeichnet, daß dem Belüftungsbecken der ersten Stufe sowie der Zone mit sauerstoffreichen Bedingungen der zweiten Stufe mit Sauerstoff angereicherte Luft oder technischer Sauerstoff zugeführt und aus diesem Belüftungsbecken und aus dieser Zone Abgas abgeführt wird.

7. Verfahren nach Anspruch 6, dadurch gekennzeichnet, daß das Abgas des Belüftungsbeckens der ersten Stufe der unter sauerstoffreichen Bedingungen betriebenen Zone der zweiten Stufe zugeführt wird.

8. Vorrichtung zur Durchführung des Verfahrens nach einem der Ansprüche 1 bis 7 mit einer Abwasserreinigungsanlage mit zwei Stufen, bei der die erste Stufe ein Belüftungsbecken und ein Klärbecken mit Schlammrückführung in das Belüftungsbecken und die zweite Stufe ein Belebungsbecken und ein Klärbecken mit Schlammrückführung in das Belebungsbecken aufweisen, dadurch gekennzeichnet, daß dem Belebungsbecken (12) der zweiten Stufe (10) ein Behandlungsbekken (11) mit anoxischen Bedingungen vorgeschaltet ist, daß zwischen dem Belebungsbecken (12) und dem Behandlungsbecken (11) der zweiten Stufe (10) eine Leitung (21) zur Rückführung von Mischwasser aus dem Belebungsbecken (12) in das Behandlungsbecken (11) vorhanden ist und daß an das Behandlungsbecken (11) der zweiten Stufe (10) sowohl eine Verbindungsleitung (23) zu dem Zwischenklärbecken (4) der ersten Stufe (1) zur Überleitung von Schwimmschlamm als auch eine Zuleitung (17) für einen Teil der der Abwasserreinigungsanlage zulaufenden Abwassermenge angeschlossen ist.

**Claims**

1. A process for the nitrification and denitrification of waste water containing organic and nitrogen-rich compounds, particularly highly-charged waste water, in a two-stage biological waste water purification plant in which in the first stage, oxidation of the organic carbon compounds and nitrification of the nitrogen-rich compounds is carried out, and, in the second stage, a denitrification is carried out, and in which the incoming waste water is divided between the two stages, the outflow from the first stage is fed to the second stage, and activated sludge is separated from the outflow from each stage and at least partially returned to the stage in question, characterised in that, in the second stage, after a zone in which anoxic conditions prevail, a zone in which oxygen-rich conditions prevail is maintained; that in the second stage, an internal reflux is operated between the zone with oxygen-rich conditions and the zone with anoxic conditions; and that zone of the second stage which is operated under anoxic conditions, is supplied both with the floating sludge which is formed when activated sludge is separated from the outflow of the first stage, and also with 25 to 50% of the amount of waste water flowing into the waste water purification plant.

2. A process as claimed in Claim 1, characterised in that the zone of the second stage which is operated under anoxic conditions is supplied not only with the waste water part-flow, but also with organic carbon compounds as electron donors, such as, in particular, methanol or methane.

3. A process as claimed in Claim 1 or Claim 2, characterised in that at a temperature of 20 to 40° C and a pH value of 6.0 to 8.5, in the first stage a space charge of 1.5 to 6 kg $BSB_5/m^3$ per day and an activated sludge concentration of 3 to 12 kg $TS/m^3$ is maintained, whilst in the second stage, a space charge of 0.5 to 3 kg $BSB_5/m^3$ per day and an activated sludge concentration of 3 to 8 kg $TS/m^3$ is maintained.

4. A process as claimed in Claim 2, characterised in that the temperature is maintained at between 25 and 35° C and the pH value at between 6.5 and 7.5.

5. A process as claimed in Claim 3 or Claim 4, characterised in that in the first stage, an activated sludge concentration of 4 to 8 kg $TS/m^3$, and in the second stage an activated sludge concentration of 4 to 6 kg $TS/m^3$, is maintained.

6. A process as claimed in one of Claims 1 to 5, characterised in that oxygen-enriched air, or commercial oxygen, is fed to the aeration tank of the first stage and to the zone which operates under oxygen-rich conditions in the second stage, and waste gas is discharged from this aeration tank and from this zone.

7. A process as claimed in Claim 6, characterised in that the waste gas from the aeration tank of the first stage is fed to the zone of the second stage which is operated under oxygen-rich conditions.

8. Apparatus for carrying out the process claimed in one of claims 1 to 7, comprising a two-stage waste water purification plant in which the first stage includes an aeration tank and a settling tank whence sludge is returned to the aeration tank, and the second stage includes an activating tank and a settling tank whence sludge is returned to the activating tank, characterised in that the activating tank (12) of the second stage (10) is preceded by a treatment tank (11) which is operated under anoxic conditions; that between the activating tank (12) and the treatment tank (11) of the second stage (10) a line (21) runs which serves to return mixed water from the activating tank (12) to the treatment tank (11); and that to the treatment tank (11) of the second stage (10) there is connected both a connection line (23) to the intermediate settling tank (4) of the first stage (1) for the transfer of floating sludge, and also a supply line (17) for a part of the amount of waste water which flows into the waste water purification plant.

## Revendications

1. Procédé de nitrification et de dénitrification d'eaux usées, notamment fortement encrassées et contenant des composés organiques et riches en azote dans une installation d'épuration biologique d'eaux usées comportant deux étages et dans laquelle on effectue dans le premier étage une oxydation des composés carbonés organiques et une nitrification des composés riches en azote alors que, dans le second étage, on effectue une dénitrification, les eaux usées arrivant dans l'installation étant réparties dans les deux étages, l'écoulement sortant du premier étage étant canalisé vers le second étage, la boue activée sortant de chaque étage étant séparée et renvoyée au moins partiellement dans l'étage correspondant, caractérisé en ce qu'on maintient dans le second étage, après une zone avec conditions anoxiques, une zone avec conditions riches en oxygène, en ce qu'on établit un reflux interne dans le second étage entre la zone avec conditions riches en oxygène et la zone avec conditions anoxiques et en ce que la zone du second étage opérant dans des conditions anoxiques reçoit aussi bien la boue flottante précipitant lors de la séparation de la boue activée sortant du premier étage qu'également 25 à 50% de la quantité d'eaux usées entrant dans l'installation d'épuration.

2. Procédé selon la revendication 1, caractérisé en ce qu'on introduit dans la zone à conditions anoxiques du second étage, en plus du courant partiel d'eaux usées, des composés carbonés organiques comme des donneurs d'électrons, tels que notamment du méthanol ou du méthane.

3. Procédé selon la revendication 1 ou 2, caractérisé en ce qu'on maintient, pour une température de 20 à 40°C, une valeur de pH de 6,0 à 8,5 dans le premier étage, une charge volumique de 1,5 à 6 kg $BOB_5/m^3$/jour et une concentration en boue activée de 3 à 12 kg $SS/m^3$ et, dans le second étage, une charge volume de 0,5 à 3 kg $BOB_5/m^3$/jour et une concentration en boue activée de 3 à 8 kg $SS/m^3$.

4. Procédé selon la revendication 2, caractérisé en ce que la température est maintenue entre 25 et 35°C et la valeur du pH est maintenue entre 6,5 et 7,5.

5. Procédé selon la revendication 3 ou 4, caractérisé en ce qu'on maintient dans le premier étage une concentration en boue activée de 4 à 8 kg $SS/m^3$ et dans le second étage une concentration en boue activée de 4 à 6 kg $SS/m^3$.

6. Procédé selon l'une quelconque des revendications 1 à 5, caractérisé en ce qu'on introduit dans le bac d'aération du premier étage et dans la zone à conditions riches en oxygène du second étage de l'air enrichi en oxygène ou de l'oxygène technique, et en ce qu'on évacue les déchets gazeux de ce bac d'aération et de cette zone.

7. Procédé selon la revendication 6, caractérisé en ce que les déchets gazeux du bac d'aération du premier étage sont introduits dans la zone, opérant dans des conditions riches en oxygène, du second étage.

8. Dispositif pour la mise en oeuvre du procédé selon l'une quelconque des revendications 1 à 7 avec une installation d'eaux usées comportant deux étages, dont le premier comprend un bac d'aération et un bac de clarification avec renvoi de la boue dans le bac d'aération, tandis que le second étage comprend un bac d'activation et un bac de clarification avec renvoi de la boue dans le bac d'activation, caractérisé en ce qu'on branche en amont du bac d'activation 12 du second étage 10 un bac de traitement 11 opérant dans des conditions anoxiques, en ce qu'il est prévuentre le bac d'activation 12 et le bac de traitement 11 du second étage 10 un tuyau 21 pour le renvoi de l'eau mélangée provenant du bac d'activation 12 dans le bac de traitement 11 et en ce que le bac de traitement 11 du second étage 10 est relié, d'une part, à un tuyau de liaison 23 aboutissant au bac de clarification intermédiaire 4 du premier étage 1 en vue du transfert de la boue flottante et, d'autre part, un tuyau 17 d'admission d'une partie de la quantité d'eaux usées pénétrant dans l'installation d'eaux usées.

Fig. 1